# EUROPÄISCHE PATENTANMELDUNG

(11) **EP 0 610 673 A1**
(43) Veröffentlichungstag der Anmeldung: **17.08.1994**
(21) Anmeldenummer: 94100477.2
(22) Anmeldetag: 14.01.1994
(51) Int. Cl.: G01N 21/78

(54) **Vorrichtung zur automatischen kolorimetrischen Auswertung von Verfärbungszonen auf einem Träger zum Nachweis von Gasen und/oder Dämpfen**

(30) Priorität: 10.02.1993 DE 4303858
(71) Anmelder: DRÄGERWERK AKTIENGESELLSCHAFT, D-23558 Lübeck (DE)
(72) Erfinder: Stark, Hartmut, D-23617 Stockelsdorf (DE); Dreyer, Peter, D-23689 Pansdorf (DE)

(57) **Zusammenfassung**

Eine Vorrichtung zur automatischen optischen Auswertung kolorimetrischer Verfärbungszonen soll in die Lage versetzt werden, nicht nur ein einziges Prüfröhrchen, sondern auch eine Mehrzahl von hintereinander auf einem gemeinsamen Träger aufgebrachten Reaktionszonen auszuwerten. Dabei sollen auch geringste Mengen an Indikatorsubstanzen für die Verfärbungszone eine ausreichende Signalintensität bei möglichst geringem Leistungsverbrauch für die optische Signalauswertung erreicht werden, wobei gleichzeitig die Fehlerempfindlichkeit verringert wird. Eine solche Vorrichtung zeichnet sich dadurch aus, daß sowohl Sende- als auch Empfangseinheit (19, 20, 22) auf einem gemeinsamen Montageträger (18) aufgebracht sind, wobei das Licht der Sendeeinheit (19, 20) über Lichtleiter (25, 27) durch den durchscheinenden Bereich des Reagenzträgers (1) geleitet wird und in Transmission bzw. Remission die Verfärbung der kanalförmig auf dem Träger (1) aufgebrachten Reaktionszonen (5) erfaßt.

## Beschreibung

Die Erfindung betrifft eine Vorrichtung für den kolorimetrischen Nachweis von gas- und/oder dampfförmigen Komponenten eines Gasgemisches anhand der Verfärbung einer kanalförmigen Reaktionszone, von denen eine oder mehrere auf einem scheibenförmigen Reagenzträger aufgenommen sind, der in eine von einer Signalsendeeinheit und einer Signalempfangseinheit erfaßten Auswerteposition gebracht ist, in welcher ein auf dem Reagenzträger aufgenommenes Datenfeld einlesbar ist, und der in eine Meßposition überführbar ist, in welcher die von der Signalsendeeinheit auf die Reaktionszone abgegebene Strahlung von der Signalempfangseinheit erfaßbar ist.

Eine derartige Vorrichtung ist in der DE 39 02 402 C l beschrieben worden.

Die bekannte Vorrichtung bezieht sich auf einen chipförmigen Reagenzträger für mehrere Kanäle, welche mit einem kolorimetrischen Indikator ausgekleidet sind, der unter Anwesenheit einer nachzuweisenden gas- und/oder dampfförmigen Komponente eines Gasgemisches eine chemische Verfärbungsreaktion eingeht. Die Länge der Verfärbung bzw. die Geschwindigkeit, mit der die Verfärbungsreaktion entlang der Reaktionszone fortschreitet, ist ein Maß für die Menge bzw. Konzentration der nachgewiesenen Komponente. Die Auswertung einer jeden Verfärbungszone erfolgt dadurch, daß eine Zeile von mehreren hintereinander liegenden Strahlern sichtbares oder unsichtbares Licht auf die Reaktionszone emittieren und das reflektierte Licht auf entsprechende Detektoren reflektieren. Sowohl die Signalsendeeinheit als auch die Signalempfangseinheit müssen dem Verlauf der Reaktionszone derart angepaßt sein, daß eine gleichmäßige Bestrahlung des Kanalverlaufs möglich ist. Wegen der kleinen Dimensionierung der Kanäle und der Reaktionszonen stehen nur geringe Mengen an Farbindikatoren zur kolorimetrischen Anzeige zur Verfügung. Entsprechend klein ist das Auswertesignal für die Empfangseinheit bzw. entsprechend anfällig ist das Meßsignal auf Störkomponenten, die z.B. auf eine ungleichmäßige Verteilung des Indikatormaterials in der Reaktionszone zurückzuführen sind. Ebenso kann eine ungleichmäßige Ausleuchtung der Reaktionszone zu einer Verfälschung des Meßsignals führen.

Zur Durchführung einer Messung wird der bekannte Träger mit seiner Vielzahl an kanalförmigen Reaktionszonen in eine Auswerteeinheit mit Hilfe einer automatischen Transportvorrichtung gebracht, wobei während des Einschiebens in die Auswerteeinheit gleichzeitig ein Datenfeld (z.B. in Form eines Barcodes) ausgelesen wird, welches sämtliche für die Messung und Auswertung der Meßsignale erforderliche Information enthält. Darin sind beispielsweise verschlüsselt die Art und Anzahl der Reaktionszonen sowie die für jede Reaktionszone maßgebliche Zuordnung zwischen Verfärbungslänge und Konzentration der nachzuweisenden Gaskomponente angegeben. Die so eingelesene Information wird an eine Steuereinheit und Datenverarbeitungsanlage (Mikroprozessor) weitergeleitet. Nach Auswertung des Datenfeldes wird der Träger in eine Meßposition versetzt, bei welcher eine oder mehrere Reaktionszonen an eine Fördereinheit (Pumpe) angeschlossen werden, mit deren Hilfe die zu untersuchende Gaskomponente durch die kanalförmigen Reaktionszonen gepumpt wird. Dabei ist die zur Untersuchung herangezogene Reaktionszone in den Strahlungsbereich der Signalsendeeinheit und der Signalempfangseinheit zur Messung der kolorimetrischen Verfärbung gebracht. Die Sende- und Empfangseinheiten sind dieselben, welche das Datenfeld in der Auswerteposition des Trägers ausgelesen haben. Während der Durchströmung des Reaktionskanals verfärbt sich der Indikator je nach Menge der zu untersuchenden Gaskomponente mehr oder weniger weit. Die Verfärbungsstrecke wird von dem Anteil der nicht verfärbten Reaktionszone durch die Reflexion und/oder die Absorption unterschiedlicher Wellenlängenintensitäten von der Signalempfangseinheit erfaßt.

Der vorliegenden Erfindung liegt somit die Aufgabe zugrunde, eine Vorrichtung der genannten Art so zu verbessern, daß bei geringsten Mengen an Indikatorsubstanzen für die Verfärbungszone, wodurch ein geringer Meßeffekt bedingt ist, dennoch eine ausreichende Signalintensität bei möglichst geringem Leistungsverbrauch für die Signalsendeeinheit zur Emission der erforderlichen Strahlungsmenge gewonnen werden kann, wobei gleichzeitig die Fehlerempfindlichkeit bei der Auswertung verringert wird.

Die Lösung der Aufgabe erfolgt dadurch, daß der einen durchscheinenden Bereich aufweisende Träger eine ebenfalls durchscheinende Reagenzträgerfolie aufnimmt, auf welcher die Reaktionszonen, den Kanalverlauf vorgebend, aufgetragen sind, die jede für sich einen für den Zutritt der zu untersuchenden Komponente vorgesehenen öffenbaren Anschluß besitzt, daß ein die Strahlung emittierender Sendekopf die Signalsendeeinheit bildet und optisch an einen Lichtleiter gekoppelt ist, dessen Emissionsfläche in Höhe der Reaktionszone zu deren Durchstrahlung einer der Seitenflächen des Reagenzträgers gegenüberliegend angeordnet ist, und daß die Signalempfangseinheit zur Aufnahme des durch die Reaktionszone transmittierten Strahlungsanteils in optisch direkter Verbindung zu der Signalsendeeinheit steht.

Der Vorteil der Erfindung liegt im wesentlichen darin, daß bei optimaler Ausnutzung der geringen Menge an Indikatorsubstanz im Durchlichtverfahren die Längenverfärbung im Verlauf der Reaktionszone durch die Signalempfangseinheit verfolgt werden kann, wobei eine gleichmäßige Ausleuchtung des Streckenverlaufs der Reaktionszone wegen der kontinuierlichen Durchleuchtung durch die Emissionsfläche des Lichtleiters sichergestellt ist. Der Abstand zwischen wirksamer Strahlungsfläche der Signalsendeeinheit (das ist die Emissionsfläche des Lichtleiters) auf der einen Seite und der signalempfindlichen Detektorfläche der Signalempfangseinheit auf der anderen Seite kann auf ein so geringes Maß reduziert werden (im wesentlichen durch die Dicke der Reagenzträgerfolie und des Trägers begrenzt), daß ein merklicher Intensitätsverlust infolge eines zu großen Abstandes der Einheiten voneinander vermieden ist. Somit kommt man mit geringen Strahlungsleistungen aus, und kann dennoch mit einem wenig gestörten Signal rechnen. Die Erfassung des Meßsignals in Transmissionsmessung bei jedem einzelnen Kanal macht es außerdem möglich, verschiedenartige Reaktionszonen auf der Reagenzträgerfolie aufzubringen. Die einfachste Form einer solchen Reaktionszone ist dabei die flächige Auftragung der für die Verfärbungsreaktion notwendigen Reaktionspartner auf die Reagenzträgerfolie beispielsweise aus einer Emulsion, oder es ist möglich, auf der Reagenzträgerfolie Glaskapillaren aufzutragen, die mit einer Innenbeschichtung versehen sind, welche die für die Verfärbungsreaktion notwendigen Komponenten enthalten. Als Lichtleiter wird jedes Medium oder Hilfsmittel verstanden, welches in der Lage ist, Licht längs eines vorgegebenen Weges von dem Sender zum Empfänger zu leiten.

Die Signalsendeeinheit besitzt als Sendekopf für die Einlesung des Datenfeldes mindestens eine Infrarotlicht emittierende LED und für die Abgabe der auf die Reaktionszone auftreffenden Strahlung mindestens eine im Sichtbaren leuchtende LED. Somit kann mit einer Sendeeinheit mittels unterschiedlicher Wellenlängen von der Signalempfangseinheit bestimmt werden, ob im gegenwärtigen Meßablauf das Datenfeld ausgelesen wird, oder ob es sich um die Auswertung der Längenverfärbung einer Reaktionszone handelt. Durch die Verwendung einer Infrarot-LED zur Auswertung des Datenfeldes kann deren Emissioncharakteristik der spektralen Empfindlichkeit der Signalempfangseinheit besser angepaßt werden. Man erzielt damit ein wesentlich besseres Signal/Rauschverhältnis, so daß eine unmodulierte, direkte Abtastung des Datenfeldes möglich ist, die sonst aufwendig unter Einsatz z.B. eines Lock-in-Verstärkers durchgeführt werden müßte.

Um den Streckenverlauf der Reaktionszone von der Signalempfangseinheit möglichst vollständig zu erfassen, ist es zweckmäßig, die Empfangseinheit mit einer Detektorzeile auszustatten, welche entweder eine Anzahl hintereinander angeordneter Einzeldetektoren oder ihrerseits in Detektorarrays zusammengefaßte Einzeldetektoren enthält, oder welche auf einem gemeinsamen Detektorträger wabenförmige oder andersartig gerasterte lichtempfindliche Bereiche aufweist. Die Empfangseinheit besitzt entweder eine Aneinanderreihung einer Vielzahl von Einzeldetektoren oder ein Detektorarray, die jeweils der Länge der Reaktionszone folgend angeordnet sind. Auf diese Weise kann sowohl die gesamte Breite der Reaktionszone als auch deren Länge in ihrer Verfärbung verfolgt werden. Es kann entweder die Länge der Verfärbungszone oder die Geschwindigkeit des Fortschreitens der Verfärbungszone erfaßt werden.

Kommt es dabei auf möglichst hohe Ortsauflösung bei der Erfassung der Länge der Verfärbung der Reaktionszone an, empfehlen sich CCD-Sensoren als Signalempfangseinheit (CCD = Charge Coupled Device); ansonsten sind alle Detektoren einsetzbar, deren Empfindlichkeitscharakteristik auf die gesendete Wellenlänge abstimmbar ist (z.B. Silizium - Fotodioden oder - Transistoren).

Um sicherzustellen, daß von der Detektorzeile jeweils die für sie zugedachte Information übermittelt wird, sei es die Information aus dem Datenfeld oder sei es die Information aus der Remissions- bzw. Transmissionsmessung, ist es zweckmäßig, eine Blendenanordnung in den optischen Strahlengang zwischen der Emissionsfläche des Lichtleiters einerseits und der Signalempfangseinheit andererseits zu bringen. Diese Blendenanordnung weist eine Datenfeldblende auf, deren Blendenschlitz korrespondierend zum als Barcode ausgestalteten Datenfeld einerseits und der Detektorzeile andererseits verläuft und die aus einem Material besteht, welches für die zur Auslesung des Datenfeldes erforderliche Strahlung undurchlässig und für die zur Durchführung der Messung erforderliche Strahlung durchlässig ist, und die in Richtung zur Detektorzeile gefolgt ist von einer Meßfeldblende, welche mehrere Meßschlitze aufweist, die senkrecht zum Blendenschlitz, jedoch in paralleler Ebene zu dem Blendenschlitz der Datenfeldblende verlaufen, deren Anzahl der Zahl der Detektoren in der Detektorzeile und deren Länge der Breite der Reaktionszone entspricht, wobei das Material der Meßblende sowohl für die Wellenlängen zur Auslesung des Datenfeldes als auch für die Wellenlänge zur Durchführung einer Remissions-/ Transmissionsmessung an der Reaktionszone undurchlässig ist. Wird der Einfachheit halber angenommen, daß zur Auslesung des Barcodes eine Infrarotstrahlung erforderlich ist, dann ist das Material der Datenfeldblende infrarotsperrend, so daß ausschließlich durch den Blendenschlitz die Infrarotstrahlung durchtritt und auf die Meßblende trifft, welche ebenfalls für Infrarotstrahlung undurchlässig ist. Da die vielen Meßschlitze senkrecht zu dem Blendenschlitz, jedoch in einer zur Datenfeldblende parallelen Ebene verlaufen, wird der Infrarotlichtstreifen des Blendenschlitzes der Datenfeldblende entsprechend der Anzahl der Meßschlitze in Einzelstrahlbündel aufgeteilt, die jeder einzeln auf einen der Detektoren der Detektorzeile treffen. Während des Transports des Reagenzträgers entlang der Detektorzeile erzeugen somit die verschiedenen Barcodes abwechselnde Hell- und Dunkelstrahlen, welche entsprechend auf die Detektoren gerichtet werden und eine abwechselnde Bestrahlung der Detektoren erzeugen, die der Folge von Hell- und Dunkelfeldern im Barcode entspricht. Sollen nun die Reagenzträger in Transmission oder Reflexion ausgelesen werden, wird beispielsweise dazu eine grüne Meßstrahlung verwendet. Im Beispiel einer Transmissionsmessung durchdringt die grüne Meßstrahlung die Reaktionszone, tritt vollständig durch die gesamte, für grün durchlässige Datenfeldblende und kann somit die gesamte Länge der Meßschlitze der ansonsten für grün undurchlässigen Meßblende durchstrahlen. Auf jeden einzelnen Detektor trifft nunmehr ein resultierender Strahlquerschnitt aus grünem Meßlicht, der in seiner Länge dem einzelnen, dem Detektor gegenüberliegenden Meßschlitz entspricht, welcher seinerseits der Breite der Reaktionszone entspricht. Da die Detektorzeile korrespondierend zur Länge der Reaktionszone verläuft, wird somit jede Reaktionszone mit einer Schar von Meßstreifen durch die Detektorzeile erfaßt. Die Dichte der resultierenden Meßstreifen hängt ab von der Dichte der Meßschlitze in der Meßblende und der Dichte der Detektoren in der Detektorzeile.

Blenden mit den genannten unterschiedlichen Durchlässigkeiten für infrarote oder farbige sichtbare Strahlung werden von der Fa. Schott aus Farbglas unter der Bezeichnung BG 18 geliefert.

Um die Ausbeute der auf die Detektorzeile auftreffenden Meßstrahlung zu erhöhen, ist es günstig, die Detektorzeile in der Scheitellinie eines zylinderförmigen Hohlspiegels aufzunehmen, in dessen Brennpunktlinie die Reaktionszone verläuft. Wird die Reaktionszone von der Meßstrahlung durchleuchtet, kann möglicherweise die Strahlung an dem durchscheinenden Material der Reagenzträgerfolie gestreut werden; die gestreute Strahlung wird jetzt an dem Reflektor des Hohlspiegels reflektiert, auf die Reaktionszone zurückgelenkt und von dort auf den Detektor zurückgeworfen. Somit ist es möglich geworden, neben der die Reaktionszone durchleuchtenden Meßstrahlung auch die an dem Verfärbungsträger der Reaktionszone entstehende Streustrahlung durch Reflexion an dem Hohlspiegel zur Messung des Verfärbungsgrades auszunutzen. Sowohl die Streustrahlung durch den nicht verfärbten durchscheinenden Bereich der Reagenzträgerfolie als auch die Streustrahlung nach Durchtritt der Meßstrahlung durch die verfärbte Reaktionszone wird von dem Reflektor erfaßt, und zumindest ein erheblicher Bruchteil davon wird wiederum auf die Verfärbungszone reflektiert und dem Detektor zur Auswertung zugeführt.

Die Auswertung des Verfärbungsgrades der Reaktionszone kann noch dadurch verbessert werden, daß zusätzlich in der Nachbarschaft zur Signalempfangseinheit ein eine weitere Meßstrahlung abgebender Remissionslichtsender angeordnet ist, dessen Lichtstrahlung auf die Reaktionszone gerichtet ist, so daß das von der Reaktionszone je nach Verfärbungsgrad reflektierte Licht ebenfalls von der Signalempfangseinheit empfangen wird. Somit erhält man durch Kombination einer Transmissions- mit einer Reflexionsmessung ein über das Signalrauschen erheblich erhöhtes Meßsignal zur Auswertung mit geringerer Fehlerabweichung.

Die Wellenlänge für die Transmissionsmessung kann die gleiche sein wie diejenige für die Reflexionsmessung, oder es können unterschiedliche Wellenlängen benutzt werden. Werden lichtemittierende Strahlungssender unterschiedlicher Wellenlänge benutzt, ergeben sich daraus folgende Vorteile: Reaktionszonen mit unterschiedlich sich verfärbenden kolorimetrischen Indikatoren können mit der jeweils für sie günstigeren Wellenlänge ausgewertet werden. Vor Durchführung einer Messung kann der zu benutzende Kanal durch eine geeignete Testwellenlänge daraufhin geprüft werden, ob noch keine Verfärbung eingetreten ist. Sollte dies schon der Fall gewesen sein, dann läßt dies auf eine Fehlfunktion des Indikators schließen, beispielsweise hervorgerufen durch Undichtheiten in der Kanalabgrenzung oder durch fehlerhafte Abdichtungen. Darüberhinaus kann während des Meßvorgangs auch eine solche Farbreaktion erfaßt werden, die sich lediglich in einem Umschlagen oder in einer Veränderung von einer Farbe auf eine andere äußert, und nicht in einer Verfärbung von weiß auf eine bestimmte Farbe. Derartige Farbumschlagreaktionen können dadurch besser ausgenutzt werden, daß der Quotient aus dem Signal der ersten Wellenlänge mit dem Signal der zweiten Wellenlänge gebildet wird. Ein derartiges Signal ist deutlicher erfaßbar, als wenn die Farbverschiebung mit einer einzigen Wellenlänge gemessen wird, was sich nur in einer schwachen Intensitätsänderung bemerkbar machen würde. Die unterschiedlichen Wellenlängen können bei 500 Nanometer und 560 Nanometer liegen.

Zu einer verbesserten Lichtführung ist vorgesehen, den Lichtleiter mit einem Ansatzstück optisch an den Sendekopf zu koppeln. Der Lichtleiter ist über eine Lichtbrücke zu der der Empfangseinheit gegenüberliegenden Reaktionszone geführt, wo die Emissionsfläche, zu einer Zylinderlinse geformt, zur Durchstrahlung der Reaktionsfläche auf die Empfangseinheit gerichtet ist. Auf diese Weise wird eine möglichst umfassende Durchstrahlung der Reaktionszone erreicht, wobei die gerätemäßige Bauform auf ein geringstmögliches Maß reduziert ist.

Eine vorteilhafte Anordnung für einen Lichtleiter besteht darin, daß er als eine für die Strahlung der Signalsendeeinheit durchlässige Lichtleiste aus Glas oder Kunststoff ausgebildet ist, wobei die Emissionsfläche als eine stirnseitige Endfläche der Lichtleiste verwirklicht ist. Eine derartige Lichtleiste ist in der Lage, möglichst viel der in einen von der Signalsendeeinheit überdeckten Raumwinkel ausgesendeten Strahlung zu erfassen und weiterzuleiten.

Der Lichtleiter kann gleichfalls ebensogut aus einem Bündel von Glasfasern zusammengestellt sein, an das die Signalsendeeinheit optisch angekoppelt ist, und dessen Austrittsfläche auf die Reaktionszone gerichtet ist.

Eine weitere einfache Ausbildungsform für einen Lichtleiter ist in einer Anordnung von Umlenkspiegeln zu sehen, wobei der Sendekopf im Brennpunktbereich eines zugeordneten Einlaßspiegels positioniert ist, und die Emissionsfläche dargestellt ist durch die Strahlungsfläche eines Auslaßspiegels. Eine derartige Anordnung zeichnet sich durch geringes Gewicht und einfache Montage aus.

Eine weitere einfache Möglichkeit für die Anordnung einer Signalsendeeinheit und einer Signalempfangseinheit besteht darin, die das zur Auswertung benötigte Licht emittierenden Sendeköpfe in direkte Gegenüberstellung zu der Reaktionszone zu positionieren, so daß diese von den Sendeköpfen angestrahlt wird. Das Transmissionslicht trifft dann ohne Umlenkung auf die Detektoren der Signalempfangseinheit. Die Reaktionszone bildet somit eine Art Filter in dem direkten Strahlengang zwischen Signalsende- und -empfangseinheit. Die Emissionsfläche und der Lichtleiter werden dann durch einen linsenförmig gestalteten Emissionskopf der Sendeköpfe gebildet.

Zweckmäßigerweise enthält der Montageträger neben dem ersten Sendekopf zur Emission der für die kolorimetrische Messung erforderlichen Strahlung einen zweiten Sendekopf zur Emission der für die Auslesung des Datenfeldes erforderliche Strahlung. Dabei kann die Meßstrahlung im sichtbaren Bereich, und die Strahlung zur Auslesung des Datenfeldes im infraroten Wellenlängenbereich liegen. Jeder der Sendeköpfe ist an den Lichtleiter gekoppelt, an dem sich jeweils eine Meßlichtbrücke für den sichtbaren Bereich und eine Ausleselichtbrücke für den infraroten Strahlungsbereich anschließen. Beide Lichtbrücken sind miteinander zusammengeführt und bilden, der Empfangseinheit gegenüberliegend, eine gemeinsame Emissionsfläche, die zu einer Zylinderlinse geformt ist, wodurch die Reaktionszone bzw. das Datenfeld durchstrahlbar ist. Die Empfindlichkeit der Empfangseinheit ist sowohl auf das sichtbare Meßlicht als auch auf das infrarote Auswertelicht abgestimmt.

Wird zusätzlich zur Signalsendeeinheit ein Remissionslichtsender vorgesehen, dann ist es zweckmäßig, die Signalsendeeinheit Licht einer ersten Wellenlänge (z.B. grün bei 500 Nanometer) und den Remissionslichtsender Licht einer zweiten Wellenlänge (z.B. gelb bei 560 Nanometer) aussenden zu lassen. Mit dieser Anordnung ist es möglich, bei bekanntem Reagenzträger das Transmissions-Remissionsverhältnis für beide Wellenlängen definiert anzugeben und die Signalempfangseinheit daraufhin zu kalibrieren, daß bei ungebrauchtem Reagenzträger dieses Verhältnis unverändert bleibt, und bei verbrauchtem Reagenzträger dieses Verhältnis sich ändert. Hat sich dieses Verhältnis infolge von Undichtheiten in der von der Umgebung ansonsten abgeschlossenen Reaktionszone verändert, ist dadurch eine Indikation für die Brauchbarkeit bzw. Unbrauchbarkeit der gesamten Nachweisvorrichtung gegeben.

Eine Ausführungsform der Erfindung wird anhand eines Beispiels in den nachfolgenden Figuren dargestellt und näher erläutert.

Es zeigen:
- Fig. 1: die Ansicht eines scheibenförmigen Reagenzträgers mit mehreren Reaktionskanälen und Datenfeld,
- Fig. 2: den Schnitt durch den Träger längs eines Reaktionskanals,
- Fig. 3: die Vorrichtung zur optischen Auswertung der Reaktionskanäle mit einer Lichtleiste aus Kunststoff, gesehen in Querrichtung des Reaktionskanals nach Fig. 2,
- Fig. 4: Die Vorrichtung zur optischen Auswertung der Reaktionskanäle mit einer Anordnung von Umlenkspiegeln,
- Fig. 5: die Vorrichtung mit einer Anordnung von einander gegenüberliegenden Sendeeinheit und Signalempfangseinheit,
- Fig. 6: eine weitere Ansicht der Vorrichtung, in Längsrichtung des Reaktionskanals nach Fig. 2 gesehen, mit einem zusätzlichen Hohlspiegel,
- Fig. 7: eine schematische Darstellung der Funktionsweise der Strahlblenden zur Datenfeldauslesung,
- Fig. 8: eine schematische Darstellung der Funktionsweise der Strahlblenden zur Signalerfassung.

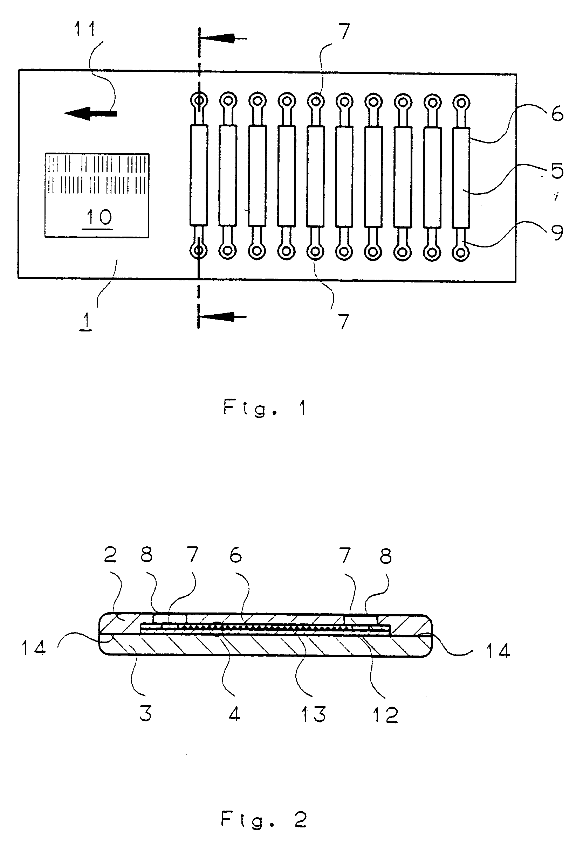

In Fig. 1 und 2 ist ein scheibenförmiger Reagenzträger (1) dargestellt, der aus einem Trägeroberteil (2) und einem Trägerunterteil (3) zusammengefügt ist, wobei zwischen den Teilen (2, 3) ein Folienverbund (4) eingespannt ist. Das aus durchsichtigem Kunststoffmaterial bestehende Oberteil (2) läßt den Blick frei auf zehn parallel verlaufende Reaktionszonen (5), welche als Bodenfläche für einen Reaktionskanal (6) ausgebildet sind. Endseitig zu den Kanälen (6) sind Zutrittsöffnungen (7) vorgesehen, durch die das nachzuweisende Gasgemisch entweder mit Hilfe einer nicht dargestellten Pumpe hindurchgesaugt, oder bei einseitiger Öffnung per Diffusion über die Reaktionszone (5) längs des Kanals (6) migrieren kann.

Die Zutrittsöffnungen (7) sind mit einer Versiegelung (8) (Fig. 2) verschlossen, die vor der Durchführung einer Messung durchgestoßen werden. Die Zutrittsöffnungen (7) sind mit den Kanälen (6) über einen Kanalanschluß (9) verbunden. Auf der Oberfläche des Trägeroberteils (2) ist ein Datenfeld (10) aufgedruckt, welches technische Informationen und Handhabungshinweise für den Gebrauch des kolorimetrischen Nachweisgerätes beinhalten. Diese Informationen sind entweder vom Anwender lesbar oder mit Hilfe eines Barcodes durch eine nicht dargestellte Auswerteeinheit erfaßbar. Ein Richtungspfeil (11) gibt an, welche Seite des Trägers zuerst in das Auswertegerät einzuschieben ist. Während des Einschiebens wird das Datenfeld ausgelesen und die darin enthaltene Information an die Auswerteeinheit weitergegeben. Der Träger (1) wird soweit in die Auswerteeinheit vorgeschoben, bis der erste nicht benutzte Reaktionskanal (6) über die optische Auswerteeinheit gelangt. Gleichzeitig wird nach Durchstoßen der Versiegelung (8) die Pumpe angeschlossen, die das zu untersuchende Meßgas durch den Kanal (6) hindurchsaugt. Je nach Gehalt der Gaskomponente in dem Meßgas verfärbt sich die Reaktionszone (5) mehr oder weniger weit. Dies wird durch die Auswerteeinheit erfaßt und zu einem Meßwert verarbeitet. Nach erfolgter Auswertung des ersten Kanals (6) findet ein automatischer Transport zum benachbarten zweiten Kanal (6) statt, dessen Auswertung in gleicher Weise wie beschrieben erfolgt. Auf diese Art können bei Bedarf bis zu zehn unterschiedliche Gasproben untersucht und gemessen werden. (Eine Vorrichtung zur automatischen Erfassung eines Datenfeldes und der Verfärbungszone eines Prüfröhrchens ist in der DE-38 21 831 beschrieben, die in auf den vorliegenden Anwendungsfall abgewandelter Ausführungsform auch für den Träger (1) eingesetzt werden kann).

Fig. 2 zeigt den Schnitt längs eines Kanals (6) aus dem Träger (1) nach der Figur 1. Der Folienverbund (4) besteht aus einer Reagenzträgerfolie (12), auf welche die kugelförmig gezeichneten, mit einem Indikator imprägnierten Reagenzträger (13) aus Silicagel aufgetragen sind. Die Reagenzträger (13) sind in dem Kanal (6) dem zu untersuchenden Gas ausgesetzt. Das Trägeroberteil (2) besitzt die über den Zutrittsöffnungen (7) befindliche Versiegelung (8), welche zum Anschluß beispielsweise der nicht dargestellten Gasförderpumpe durchstochen werden. Über die Zutrittsöffnungen (7) hat das nachzuweisende Gas Zutritt zu dem Kanal (6) und somit zu dem auf den Reagenzträgern (13) aufgebrachten Indikator. Das Trägeroberteil (2) ist mit dem Trägerunterteil (3) über eine Naht (14) ringsum laufend verklebt, wodurch der Folienverbund (4) zwischen beiden Teilen (2, 3) eingeklemmt ist.

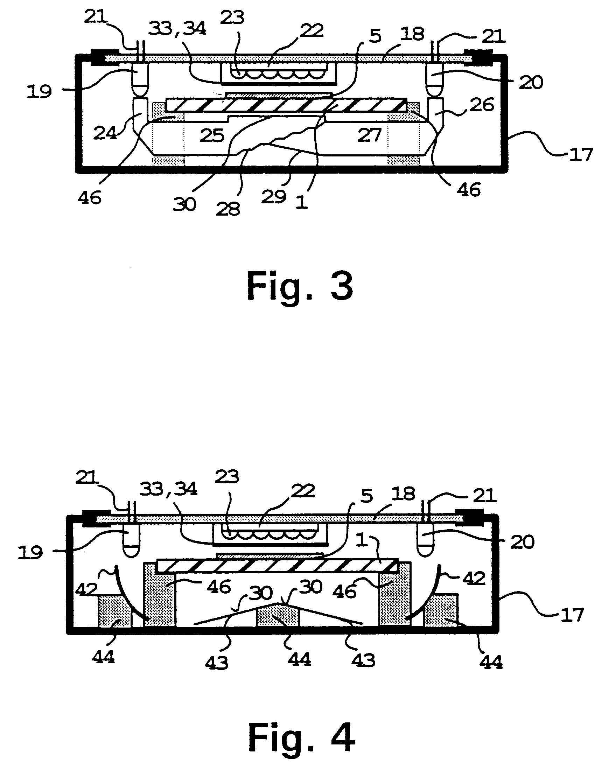

In Fig. 3 ist die Vorrichtung gezeigt, bei welcher der Reagenzträger (1), quer zum Reaktionskanal (6) dargestellt, in seine Meßposition gebracht ist. Er ist schiebbar, von einer nicht dargestellten Antriebseinheit bewegt, auf Stützen (46) aufgenommen. In dem Gehäuse (17) der Vorrichtung ist ein Montageträger (18) aufgenommen, auf welchem sowohl ein Sendekopf (19) für die Emission der Meßstrahlung als auch ein Sendekopf (20) zur Emission der für die Auslesung des Datenfeldes (10) erforderlichen infraroten Strahlung montiert sind. Die Anschlußdrähte (21) der Sendeköpfe (19, 20) sind symbolhaft angedeutet und repräsentieren die Verbindung zu einer nicht dargestellten Versorgungseinheit zum elektrischen Betreiben und zur Ansteuerung der Sendeköpfe (19, 20). Auf demselben Montageträger (18) ist eine Signalempfangseinheit (22) befestigt, welche der zu untersuchenden Reaktionszone (5) gegenüberliegend angeordnet ist. Die Signalempfangseinheit (22) besteht aus einer Reihe von Detektoren (23), die sich entlang der Reaktionszone (5) erstrecken. Der Sendekopf (19) zur Emission der Meßstrahlung ist eine im sichtbaren Bereich leuchtende LED, welche in optischem Kontakt zu einem Ansatzstück (24) eines Lichtleiters (25) steht. Desgleichen ist der Sendekopf (20) zur Emission des Infrarotlichtes eine entsprechend leuchtende LED, welche ihrerseits mit einem Ansatzstück (26) eines die Infrarotstrahlung durchlassenden Lichtleiters (27) verbunden ist. Der Lichtleiter (25) für die Meßstrahlung endet in einer angeschrägten Reflexionsfläche (28) für die Meßstrahlung, die aus treppenförmig ansteigenden Einzelflächen zusammengesetzt ist, welche jeweils in Position und Reflexionswinkel derart abgestimmt sind, daß jeweils eine Einzelfläche einem der Detektoren (23) der Signalempfangseinheit (22) strahlungsmäßig betrachtet gegenüberliegt. In ähnlicher Weise ist der Lichtleiter (27) für die Infrarotstrahlung an seinem dem Ansatzstück (26) gegenüberliegenden Ende mit einer Reflexionsschrägen (29) versehen, wodurch die gesamte Infrarotstrahlung durch das Datenfeld (10) gestrahlt wird, wenn der Träger (1) sich in seiner anfänglichen Auswerteposition befindet. Sowohl die Reflexionsfläche (28) als auch die Reflexionsschräge (29) lenken die Strahlung der Sendeköpfe (19, 20) in Richtung einer zylinderförmigen Emissionsfläche (30), welche in ihrer Ausdehnung der Reaktionszone (5) entspricht.

Eine Spiegelanordnung zur Umlenkung der Strahlung von dem Sendekopf (19, 20) zur Reaktionszone (5) des Reagenzträgers (1) ist in Fig. 4 dargestellt. Gleiche Symbole, die aus der Fig. 3 übernommen sind, sind mit denselben Bezugsziffern versehen. Die Meßstrahlung aus dem Sendekopf (19) und die infrarote Strahlung aus dem Sendekopf (20) wird jeweils auf einen ihnen zugeordneten Einlaßspiegel (42) gerichtet, der konkav gewölbt ist, so daß die Sendeköpfe (19, 20) im jeweiligen Brennpunktbereich der Einlaßspiegel (42) positioniert sind. Die von den Spiegeln (42) reflektierte Strahlung fällt auf jeweils einen Reflektor (43), dessen Reflexionsfläche als Emissionsfläche (30) dient, durch welche die Strahlung in Transmission durch den Reagenzträger (1), die Reaktionszone (5), die Blenden (33, 34) und schließlich auf die Detektoren (23) gerichtet wird. Die Spiegel (42) und Reflektoren (43) sind auf einer Spiegelmontierung (44) befestigt.

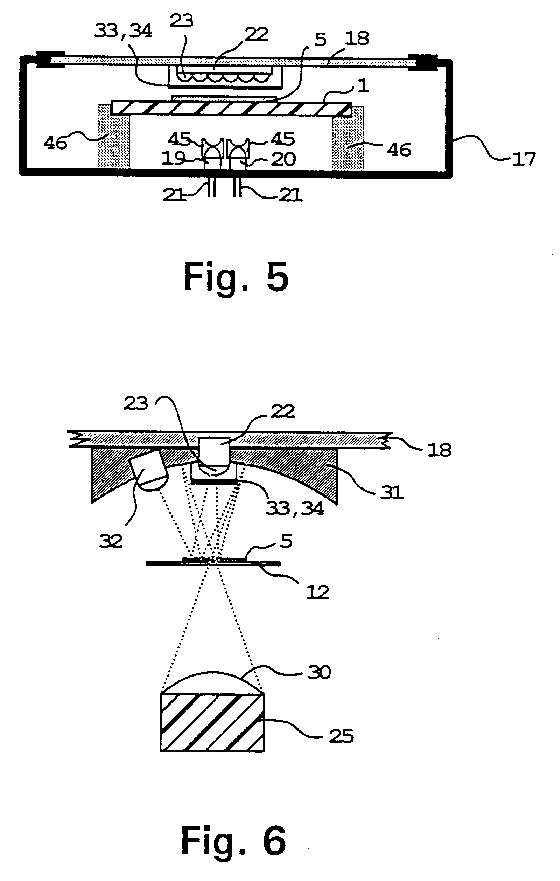

Eine weitere einfache Anordnung von Sendeköpfen (19, 20) einerseits und Signalempfangseinheit (22) andererseits ist in Fig. 5 dargestellt. Auch hier sind identische Bauteile wie in Fig. 3 und 4 mit denselben Bezugsziffern versehen. Im Gegensatz zu Fig. 3 und 4 sind jedoch die Sendeköpfe (19, 20) auf der der Signalempfangseinheit (22) abgewandten Seite des Reagenzträgers (1) auf der Grundfläche des Gehäuses (17) montiert. Ihre Strahlung wird somit direkt in Transmission durch die Reaktionszone (5) auf die Signalempfangseinheit gerichtet. Der Lichtleiter und die Emissionsfläche werden durch den linsenförmig gestalteten Emissionskopf (45) der Sendeköpfe (19, 20) gebildet.

In Fig. 6 sind einige Einzelheiten aus Fig. 3 quer zum Reaktionskanal (6) der Fig. 2 gesehen dargestellt, wie sie für die Erfassung der Meßstrahlung erforderlich sind. Dabei ist auf dem Montageträger (18) zusätzlich zur Signalempfangseinheit (22) ein zylinderförmiger Hohlspiegel (31) aufgebracht, in dessen Scheitellinie die Signalempfangseinheit in Form einer Detektorzeile (22) eingelassen ist. Ebenfalls auf dem Montageträger (18) angebracht und den Hohlspiegel (31) durchsetzend ist ein Remissionslichtsender (32) vorgesehen, der aus einer LED mit Lichtleiste oder aus einer LED-Zeile besteht, welche im sichtbaren Bereich Strahlung auf die Reaktionszone (5) emittiert. Der Einfachheit halber ist die Reaktionszone (5) auf der Reagenzträgerfolie (12) aufgebracht, wobei die übrigen Bauteile des Trägers (1), die zum Tragen der Reagenzträgerfolie (12) notwendig sind, sowie die weiteren Folien des Verbunds (4), fortgelassen wurden. Die zu einer Zylinderlinse (30) geformte Emissionsfläche des Lichtleiters (25) emittiert eine Meßstrahlung entsprechend dem gestrichelt dargestellten Strahlungsverlauf durch die Reagenzträgerfolie (12) und durch die darauf befindliche Reaktionszone (5). Diese Transmissionsstrahlung wird zum einen direkt auf die Signalempfangseinheit (22) projiziert, sie wird zum anderen auch von der Oberfläche der Reaktionszone (5) und durch die Reagenzträgerfolie (12) gestreut und trifft auf den Hohlspiegel (31) benachbart zu der Signalempfangseinheit (22). Diese Streustrahlung wäre an sich zur Auswertung der Verfärbung in der Reaktionszone (5) verloren, wird jedoch infolge Reflexion an dem Hohlspiegel (31) zurückgeworfen, trifft auf die Reaktionszone (5) auf und wird von dort zu einem gewissen Bruchteil auf die Signalempfangseinheit (22) zurückgeleitet. Dadurch erhöht sich die Ausbeute der Transmissionsstrahlung zur Ausnutzung eines Meßsignals der Verfärbung entlang der Reaktionszone (5), welche im gegebenen Zeitpunkt untersucht wird. Der Remissionslichtsender (32) sendet zusätzlich Meßstrahlung entweder einer anderen oeder derselben Wellenlänge aus, wie sie die Transmissionsstrahlung besitzt. Der Remissionslichtsender (32) ist ebenfalls auf die Reaktionszone (5) gerichtet, wodurch die Remissionsstrahlung auf dieselbe Signalempfangseinheit (22) reflektiert wird. Auch hierbei tritt derselbe Effekt in bezug auf Streustrahlung bei der Remission auf, wie er bei der Beschreibung der Transmissionsmessung erläutert wurde. Wenn auch im dargestellten Beispiel der Remissionslichtsender (32) in Verbindung mit dem Hohlspiegel (31) dargestellt ist, so ist seine Verwendung nicht davon abhängig, ob der Hohlspiegel (31) vorhanden ist oder nicht.

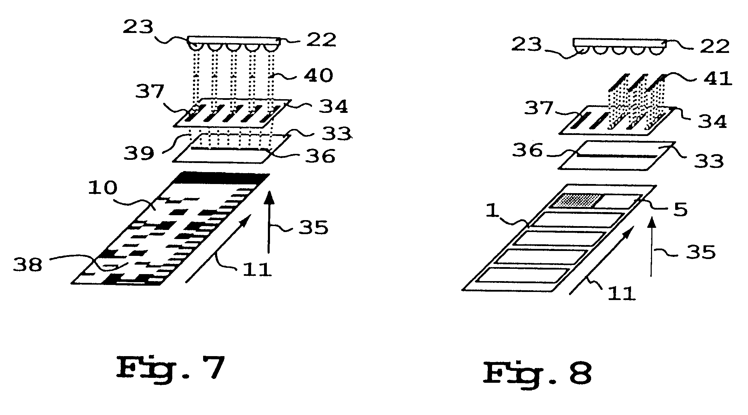

In Fig. 7 und Fig. 8 ist auf schematische Weise unter Einbeziehung lediglich der notwendigen Einzelheiten aus den Figuren 1 bis 6 die Wirkungsweise sowohl einer Datenfeldblende (33) als auch einer Meßblende (34) dargestellt. In Fig. 7 ist die Situation gezeigt, bei welcher der Reagenzträger (1) in Ausleseposition gebracht ist. Dabei wird das Datenfeld (10) in Form eines Barcodes in Richtung des Richtungspfeils (11) unter der Datenfeldblende (33) hindurch geschoben. Das von dem Sendekopf (20) emittierte Infrarotlicht durchscheint das Datenfeld (10) in Richtung des Lichtpfeils (35). Die Datenfeldblende (33) besteht aus Infrarotlicht-undurchlässigem Material, so daß alleine durch einen Blendenschlitz (36) Infrarotlicht durch die Datenfeldblende (33) dringt. Der Blendenschlitz (36) entspricht in seiner Längenausdehnung der Breite des Datenfeldes (10). Das durch den Blendenschlitz (36) gedrungene Infrarotlicht trifft anschließend auf die Meßfeldblende (34), welche ebenfalls für Infrarotlicht undurchlässig ist. In der Meßfeldblende (34) sind mehrere Meßschlitze (37) eingelassen, die im rechten Winkel zum Blendenschlitz (36) der Datenfeldblende (33) verlaufen. Die Meßfeldblende (34) ist parallel zum Datenfeld (10) und zur Datenfeldblende (33) ausgerichtet. Die Positionen der Meßschlitze (37) sind zum einen ausgerichtet auf die Codierstreifen (38) des Datenfeldes (10), und zwar je ein Meßschlitz (37) für einen Codierstreifen (38); zum anderen sind die Meßschlitze (37) ausgerichtet auf jeweils einen Detektor (23) der Signalempfangseinheit (22). Durch die gekreuzte Anordnung von Blendenschlitz (36) einerseits und Meßschlitzen (37) andererseits wird das durch den Blendenschlitz (36) hindurchtretende einzige Strahlungsband (39) in mehrere Strahlungsstreifen (40) aufgeteilt, die in ihrer Anzahl der Zahl der Meßschlitze (37) entsprechen. Jeder einzelne Strahlungsstreifen (40) trifft auf den ihm zugeordneten Detektor (23). Je nach Vorliegen eines Hell- bzw. Dunkelfeldes auf dem Codierstreifen (38) werden entsprechende Strahlungsstreifen (40) erzeugt und auf die Detektoren (23) gerichtet.

In Fig. 8 ist schematisch eine Reaktionszone (5) dargestellt, die zur Hälfte geschwärzt ist. Der geschwärzte Bereich soll die Verfärbung der Reaktionszone (5) repräsentieren. In der hier gezeigten Meßposition des Trägers (1) wird von dem Sendekopf (19) eine grüne Meßstrahlung entsprechend dem Lichtpfeil (35) durch die Reaktionszone (5) in Transmission geleitet. Die so erhaltene Transmissionsstrahlung (35) trifft auf die für die grüne Meßstrahlung durchlässige Datenfeldblende (33), so daß diese Blende (33) in bezug auf die Meßstrahlung keine Blendenwirkung zeigt. Die gesamte Meßstrahlung (35) trifft somit auf die Meßfeldblende (34), welche ihrerseits für die grüne Meßstrahlung (35) undurchlässig ist. Da die Länge der Meßschlitze (37) der Breite der Reaktionszone (5) entspricht, entsteht durch die Meßfeldblende (34) eine Reihe von Meßstrahlbändern (41), die durch solche Meßschlitze (37) hindurchtreten, die dem nicht verfärbten Bereich der Reaktionszone (5) gegenüberliegen. Entsprechend der Anzahl von Meßstrahlbändern (41) werden zugehörige Detektoren des Detektorarrays (23) mit Meßstrahlung (35) belegt und erzeugen ein Meßsignal, welches der Länge der Verfärbung auf der Reaktionszone (5) entspricht. Im dargestellten Beispiel sind zwei der Meßschlitze (37) nicht durchstrahlt, weil sie dem verfärbten, für die Meßstrahlung mehr oder weniger undurchlässigen Bereich der Reaktionszone (5) gegenüberliegen. Für den Fall, daß der verfärbte Bereich der Reaktionszone (5) nur teilweise für die Meßstrahlung durchlässig ist, werden sämtliche Meßschlitze (37) durchstrahlt, wobei jedoch diejenigen Meßschlitze (37), welche dem verfärbten Bereich der Reaktionszone (5) gegenüberliegen, in ihrer Intensität geschwächt sind; diejenige Meßstrahlung jedoch, die durch solche Meßschlitze (37) dringt, welche dem nicht verfärbten Bereich der Reaktionszone (5) gegenüberliegen, sind in ihrer Intensität ungeschwächt. Auch in diesem Fall wird durch die Veränderung der Intensität entlang der Detektoren Detektorarrays (23) von der Signalempfangseinheit (22) ein der Verfärbungszone entsprechendes Signal erzeugt.

Mehrere Detektoren (23) sind als Detektorarray, dem Verlauf der Reaktionszone (5) folgend, hintereinander angeordnet. Somit kann nicht nur die Länge der Verfärbung der Reaktionszone (5), wie in der Figur 8 dargestellt, gemessen werden, sondern es kann auch der zeitliche Verlauf des Fortschreitens einer Verfärbung verfolgt werden. Dazu braucht von einer nicht dargestellten Signalverarbeitungseinheit lediglich die innerhalb einer vorgebbaren Zeiteinheit bestrahlte Anzahl von Detektoren (23) ermittelt zu werden, oder es wird abgefragt, welche Zeitspanne zwischen der Bestrahlung eines Detektors (23) und dem jeweils nachfolgenden verstrichen ist.

## Patentansprüche

1. Vorrichtung für den kolorimetrischen Nachweis von gas- und/oder dampfförmigen Komponenten eines Gasgemisches anhand der Verfärbung einer kanalförmigen Reaktionszone, von denen eine oder mehrere auf einem scheibenförmigen Reagenzträger aufgenommen sind, der in eine von einer Signalsendeeinheit und einer Signalempfangseinheit erfaßten Auswerteposition gebracht ist, in welcher ein auf dem Reagenzträger aufgenommenes Datenfeld einlesbar ist, und der in eine Meßposition überführbar ist, in welcher die von der Signalsendeeinheit auf die Reaktionszone abgegebene Strahlung von der Signalempfangseinheit erfaßbar ist, dadurch gekennzeichnet, daß der einen durchscheinenden Bereich aufweisende Träger (1) eine ebenfalls durchscheinende Reagenzträgerfolie (12) aufnimmt, auf welcher die Reaktionszonen (5), den Kanalverlauf (6) vorgebend, aufgetragen sind, die jede für sich einen für den Zutritt der zu untersuchenden Komponente vorgesehenen öffenbaren Anschluß (9) besitzt, daß ein die Strahlung emittierender Sendekopf (19, 20) die Signalsendeeinheit bildet und optisch an einen Lichtleiter (25, 27; 42, 43) gekoppelt ist, dessen Emissionsfläche (30, 45) in Höhe der Reaktionszone (5) zu deren Durchstrahlung einer der Seitenflächen des Reagenzträgers (1) gegenüberliegend angeordnet ist, und daß die Signalempfangseinheit (22) zur Aufnahme des durch die Reaktionszone (5) transmittierten Strahlungsanteils in optischer Verbindung zu der Emissionsfläche (30, 45) steht.

2. Vorrichtung nach Anspruch 1, dadurch gekennzeichnet, daß bei in Meßposition und in Auswerteposition versetztem Reagenzträger (1) der die Strahlung emittierende Sendekopf (19, 20) optisch an ein Ansatzstück (24, 26) des Lichtleiters (25, 27) gekoppelt ist, so daß der Reagenzträger (1) als eine Trägerscheibe in der Ebene zwischen der Emissionsfläche (30) des Lichtleiters (25, 27) und der Signalempfangseinheit (22) positioniert ist.

3. Vorrichtung nach Anspruch 1 oder 2, dadurch gekennzeichnet, daß der Lichtleiter eine für die Strahlung der Signalsendeeinheit (19, 20) durchlässige Lichtleiste (25, 27) aus Kunststoff oder Glas ist, wobei die Emissionsfläche als eine stirnseitige Endfläche (30) der Lichtleiste (25, 27) ausgebildet ist.

4. Vorrichtung nach Anspruch 1, dadurch gekennzeichnet, daß der Lichtleiter als eine Anordnung von Umlenk-Spiegeln (42, 43) gebildet ist, wobei der Sendekopf (19, 20) im Brennpunkt eines als Einlaßspiegel (42) ausgebildeten Umlenkspiegels angeordnet ist, und die Emissionsfläche die Strahlungsfläche (30) eines als Auslaßspiegel (43) ausgebildeten Umlenkspiegels darstellt.

5. Vorrichtung nach einem der Ansprüche 1 bis 4, dadurch gekennzeichnet, daß die Signalsendeeinheit als Sendekopf für die Einlesung des Datenfeldes (10) eine Infrarotlicht-emittierende LED (20), und für die Abgabe der auf die Reaktionszone (5) gerichteten Meßstrahlung eine im Sichtbaren leuchtende LED (19) besitzt.

6. Vorrichtung nach einem der Ansprüche 1 bis 5, dadurch gekennzeichnet, daß die Empfangseinheit als eine Reihe von Detektoren (23) ausgebildet ist, die auf dem Montageträger (18), dem Verlauf der Reaktionszonen (5) folgend, zu einer Detektorzeile (22) zusammengefaßt sind.

7. Vorrichtung nach einem der Ansprüche 1 bis 6, dadurch gekennzeichnet, daß zwischen der Empfangseinheit (22) und der der Empfangseinheit (22) gegenüberliegenden Emissionsfläche (30) des Lichtleiters (25, 27) eine Datenfeldblende (33) angeordnet ist, deren Blendenschlitz (36) korrespondierend zum als Barcode (10) ausgestalteten Datenfeld einerseits und der Detektorzeile (22) andererseits verläuft, und die aus einem Material besteht, welches für die zur Auslesung des Barcodes (10) erforderliche Strahlung undurchlässig und für die zur Durchführung der Messung entlang der Reaktionszone (5) erforderliche Strahlung durchlässig ist, und die in Richtung zur Detektorzeile (22) gefolgt ist von einer Meßfeldblende (34), welche mehrere Meßschlitze (37) aufweist, die senkrecht zum Blendenschlitz (36), jedoch in paralleler Ebene zu dem Blendenschlitz (36) der Datenfeldblende (33) verlaufen, deren Anzahl der Zahl der Detektoren (23) und deren Länge der Breite der Reaktionszone (5) entspricht, wobei das Material der Meßfeldblende (34) sowohl für die Wellenlänge zur Auslesung des Datenfeldes (10) als auch für die Wellenlänge zur Durchführung einer Transmissions- oder/und Remissionsmessung an der Reaktionszone (5) undurchlässig ist.

8. Vorrichtung nach Anspruch 6 oder 7, dadurch gekennzeichnet, daß die Detektorzeile (22) in der Scheitellinie eines zylinderförmigen Hohlspiegels (31) aufgenommen ist, in dessen Brennpunktlinie die Reaktionszone (5) verläuft.

9. Vorrichtung nach einem der Ansprüche 1 bis 8, dadurch gekennzeichnet, daß zusätzlich in der Umgebung der Signalempfangseinheit (22) ein eine weitere Meßstrahlung abgebender Remissionslichtsender (32) angeordnet ist, dessen Lichtstrahlung auf die Reaktionszone (5) gerichtet ist, so daß das von der Reaktionszone (5) je nach Verfärbungsgrad reflektierte Licht von der Signalempfangseinheit (22) empfangen wird.

10. Vorrichtung nach einem der Ansprüche 1 bis 9, dadurch gekennzeichnet, daß die Signalsendeeinheit aus einer Anzahl mehrerer, in unterschiedlichen Wellenlängen strahlenden Sendeköpfen (19, 32) besteht.

11. Vorrichtung nach Anspruch 9 oder 10, dadurch gekennzeichnet, daß die Signalsendeeinheit (19) Licht einer ersten Wellenlänge (z.B. 500 Nanometer/grün) und der Remissionslichtsender (32) Licht einer zweiten Wellenlänge (z.B. 560 Nanometer/gelb) aussendet.

12. Vorrichtung nach einem der Ansprüche 1 bis 11, dadurch gekennzeichnet, daß der Montageträger (18) einen ersten Sendekopf (19) zur Emission der für die kolorimetrische Messung erforderliche Meßstrahlung im sichtbaren Wellenlängenbereich, und einen zweiten Sendekopf (20) zur Emission der für die Auslesung des Datenfeldes (10) erforderliche Strahlung im infraroten Wellenlängenbereich trägt, die jeweils für sich getrennt an den Lichtleiter (25, 27) gekoppelt sind, und daß sich an den Lichtleiter (25, 27) jeweils eine Reflexionsfläche (28) für die sichtbare Strahlung und eine Reflexionsschräge (29) für die infrarote Strahlung anschließen, die beide miteinander zu der zu untersuchenden Reaktionszone (5) bzw. dem Datenfeld (10) hin weisend zusammengeführt sind und dort zu einer gemeinsamen Emissionsfläche (30) vereint und ausgebildet sind, wodurch die Reaktionszone (5) bzw. das Datenfeld (10) durchstrahlbar sind, und daß die Empfindlichkeit der Empfangseinheit (22) sowohl auf die sichtbare Meßstrahlung als auch auf die infrarote Auswertestrahlung abgestimmt ist.

13. Vorrichtung nach Anspruch 1 oder 2, dadurch gekennzeichnet, daß die Sendeköpfe (19, 20) auf der der Signalempfangseinheit (22) abgewandten Seite des Reagenzträgers (1) auf der Grundfläche des Gehäuses (17) montiert sind, so daß deren Strahlung in direkter Transmission durch die Reaktionszone (5) und das Datenfeld (10) auf die Signalempfangseinheit (22) gerichtet ist, und daß der Lichtleiter und die Emissionsfläche durch den linsenförmig gestalteten Emissionskopf (45) der Sendeköpfe (19, 20) gebildet sind.
